# EUROPEAN PATENT SPECIFICATION

(11) **EP 3 316 610 B1**
(45) Date of publication and mention of the grant of the patent: **20.05.2020**
(21) Application number: 16196047.1
(22) Date of filing: 27.10.2016
(51) Int. Cl.: H04W 12/08

(54) **METHOD TO SET UP A COMMUNICATION CONNECTION BETWEEN AN ACCESS ENTITY AND A CORE ENTITY OF A CORE NETWORK**
VERFAHREN ZUM AUFBAU EINER KOMMUNIKATIONSVERBINDUNG ZWISCHEN EINER ZUGANGSEINHEIT UND EINER KERNEINHEIT EINES KERNNETZWERKS
PROCÉDÉ DESTINÉ À ÉTABLIR UNE CONNEXION DE COMMUNICATION ENTRE UNE ENTITÉ D'ACCÈS ET UNE ENTITÉ DE NOYAU D'UN RÉSEAU CENTRAL

(43) Date of publication of application: 02.05.2018
(73) Proprietor: Vodafone GmbH, 40549 Düsseldorf (DE)
(72) Inventor: BINDRIM, Walter, 45721 Haltern am See (DE); FERNANDES, António Carlos Correia, 40489 Düsseldorf (DE); NIKS, David, 6295 AH Lemiers (NL)
(74) Representative: Patentanwälte Bals & Vogel

(56) References cited:
- WO-A1-2011/079861
- "Universal Mobile Telecommunications System (UMTS); LTE; Architecture enhancements for non-3GPP accesses (3GPP TS 23.402 version 13.4.0 Release 13)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V13.4.0, 1 March 2016 (2016-03-01), XP014274227,
- INTEL CORPORATION: "Authorization of out of coverage remote UEs for UE-to-Network relay", 3GPP DRAFT; R2-153676-REMOTEUE-AUTHORISATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Beijing, China; 20150824 - 20150828 23 August 2015 (2015-08-23), XP051004338, Retrieved from the Internet: URL:http://www.3gpp.org/ftp/Meetings_3GPP_ SYNC/RAN2/Docs/ [retrieved on 2015-08-23]
- Anonymous: "Tethering - Wikipedia", , 23 February 2013 (2013-02-23), XP055443536, Retrieved from the Internet: URL:https://en.wikipedia.org/w/index.php?t itle=Tethering&oldid=539823090 [retrieved on 2018-01-23]

## Description

The present invention is related to a method to set up a communication connection between an access entity and a core network entity of a core network as well as respective computer program product to carry out the inventive method.

It is known to offer methods to set up communication connections between access entities and core entities of a core network. The core network can, for example, be the core of a mobile telecommunication system and therefore offers communication possibilities to other mobile entities, other access entities or to the internet. An access entity can, for example, be a Wi-Fi hotspot which offers the possibility of access to the core network as well as the telecommunication system to mobile entities.

WO 2011/079861 A1 and "Universal Mobile Telecommunications Systems (UMTS); LTE; Architecture enhancements for non-3GPP accesses (3GPP TS 23.402 version 13.4.0 Release 13)" of ETSI disclose methods for establishing PDN connection between a user equipment and a network. These methods have the disadvantage, that for each user equipment the method has to be performed. This lead to excessive bandwidth usage between an access entity and the network. 3GPP TSG-RAN WG2 Meeting #91 @ Beijing 24.-28.08.2015 / R2-153676 refers to a method for establishing a network connection of a remote UE to a core network by means of a relay UE. In the article "Tethering" on Wikipedia of 23. February 2013, a procedure for sharing an internet connection of mobile phone or tablet with other devices, such as a laptop, is described.

It is a disadvantage of commonly known methods that there is no information exchange between the core network and the access entity about the services to be allowed and/or the origin of the access entity for the core network. This leads to a situation that the core network does not have any knowledge about specific services which are allowed for the access entity or which should be blocked for the access entity. For example, access entities can be provided by third parties which are not part of the owner of the mobile telecommunication system. Respective service contracts allow that possibility which define services to be used by that third party access entity and to be offered by the mobile telecommunication system. The same also applies for mobile entities which are used by mobile users to be connected to the respective access entity. Based on that lack of information, the mobile telecommunication system can only provide basic services to such third party access entities or in particular to all access entities.

It is an object of the present invention to overcome aforesaid problems. In particular, it is an object of the present invention to provide an easy and cost-efficient solution to establish a communication connection including information about the usable services between the access entity and the core network.

Aforesaid object is achieved by a method according to independent claim 1 and a computer program product according to independent claim 9. Further features and details of the invention result from the dependent claims. Any embodiments of this description which are not covered by the appended claims are considered as not being part of the present invention. Features and details discussed with respect to the inventive method are also correlated with the inventive computer program product and the other way round.

It is an aspect of the present invention to provide a method to set up a communication connection between an access entity offering access to a core network to mobile entities and a core network entity of a core network of a mobile telecommunication system, said access entity being configured as a trusted wireless access network and/or an enhanced packet data gateway, offering access to the core network to mobile entities connected to the access entity, said method comprising the following steps:
- sending a communication request, comprising at least one origin value specific for the origin of the access entity, from the access entity to the core network entity,
- receiving the communication request at the core network entity;
- comparing the origin value of the communication request with an origin list, wherein the origin list comprises separate service levels, which are correlated to origin values of access entities, and
- setting up the communication connection adapted to a service level correlated to the at least one origin value specific for the origin of the access entity, based on the result of the comparison,
wherein the origin value comprises at least one mobile entity identification being specific for a mobile entity connected to the access entity and/or specific for the user of said mobile entity, and
wherein the origin value is specific for a location of the access entity and/or comprises information that the access entity is hosted by a third party, said third party being correlated with the owner of the mobile telecommunication system with a service contract defining the service level correlated to the origin value specific for the origin of the access entity.

In addition to already known methods, the exchange of information is now established before a communication connection is set up. To set up a communication connection a so-called signaling should be carried out. Part of that signaling is the communication request which gives some information to the core network entity that a communication connection should be set up. That communication request typically comprises a lot of different information about the type, the service, the needed bandwidth and respective further information about the communication connection to be set up. According to the present invention, such communication request is now additionally provided with origin values or at least one origin value. The origin value is specific for the origin of the access entity. The origin of the access entity has to be understood according to the present invention as the location of the access entity and/or the correlation between the access entity and the core network, respectively the mobile telecommunication system. For example, the origin value can comprise some information that the access entity is hosted by a third party which is correlated with the owner of the mobile telecommunication system with a respective service contract. Additionally or alternatively, the access entity can provide an origin value specific for the location or the geo position of itself to the core network.

Moreover, an identification step is carried out for the mobile entity or the user of that mobile entity. For example, a module within the mobile entity, namely comprising a SIM card or the like, can be used to provide that mobile entity identification. The origin value and/or the origin list therefore cannot only correlate the access entity with the respective information in the origin list but also the mobile entity connected to that access entity. In other words, the core network entity now has not only information about the access entity and its origin but also the mobile entity which is connected to that access entity. A further differentiation between the services to be provided not only to different access entities but also to be provided to different mobile entities being connected to that access entities can thereby be achieved with the inventive method.

Furthermore, the access entity is configured as a trusted wireless access network (TWAN) and/or an enhanced packet data gateway (PDG). The use of trusted wireless access networks and enhanced packet data gateways is also known within the state of the art and therefore, this possibility to carry out an inventive method can take into account already existing technical structure of already existing mobile telecommunication networks.

According to the present invention, the core network entity of the core network can be configured to be part of the network of a telecommunication system provider. Of course also entities and/or networks of other providers or users of a telecommunication system can be understood as core entities or core networks in the light of the present invention.

Based on the additional information of the origin value, an additional check can be carried out. After the communication request and therefore also the origin value has been received by the core network entity, the origin value can be compared to an origin list. The origin list comprises correlating information between each origin value and respective services or further details to be used while setting up the communication connection. For example, and as described later on, the origin list can comprise separate service levels, which are correlated to origin values of access entities. For example, if a third party access entity only has a basic contract with the owner of the mobile telecommunication system, which means that only basic services are allowed from the mobile telecommunication system to the access entity, the origin list comprises a low service level for that origin value being specific for the access entity which has sent the communication request. The communication connection has in the last step set up based on that comparison, namely if the origin list gives only basic services to be allowed to the communication connection, this is correlated with the setting up of the communication connection.

Based on the method steps discussed above, the communication connection can therefore be adapted to the specific access entity who requests the communication connection. Access entities comprising an origin value being correlated with a high service level according to the origin list will receive a better communication connection as the respective third party access entities which origin values are correlated with low services on the origin list. Of course, the origin value can comprise a correlation in a quality manner as well as in a quantity manner within the origin list.

According to the present and inventive method, the communication connection can now be set up based on additional information of the origin value. This leads to the possibility for the mobile telecommunication system to differentiate between separate access entities and to offer specific service levels to specific access entities. The use of the bandwidth between several access entities and the core network of the mobile telecommunication system can thereby be easily and cost-efficient prioritized between several access entities trying to establish a communication connection to the core network.

It is one possibility that a method according to the present invention is characterized in that the step of setting up the communication connection is selected out of at least one of the following options:
- setting up the requested communication connection;
- setting up a communication connection which is different from the requested communication connection;
- blocking the set up communication connection.

Aforesaid list comprises the three alternatives which can be used during the setup process. If the requested communication connection by the communication request fits to the correlation within the origin list and the origin value, the communication connection can be set up as requested. On the other hand, if an access entity requests a communication connection which does not fit to the correlation between its origin value and the origin list, the communication connection can be blocked fully. Of course, the setup can make use of the additional information and therefore can use the correlation between the origin value and the origin list to set up a communication connection which could be different from the requested communication connection. If, for example, an access entity asks for a high level communication connection with a high bandwidth but the correlation between the origin value and the origin list only allows a low level communication connection with a lower bandwidth, this lower bandwidth can be used for setting up a different communication connection within a respective lower bandwidth and therefore provide a communication connection based on the agreed correlation between the origin value and the origin list.

It is a further possibility that according to the present invention the method is characterized in that the step of comparison of the origin values is carried out within the core network, in particular within the core network entity. Typically, a respective information about access entities, in particular third party access entities, is an information to be stored centrally within the core network. The core network entity itself can provide respective preferences to carry out that comparison step. This leads to a very compact structure as well as to an easy possibility to update origin lists and therefore to update comparison steps for the inventive method.

A further advantage could be that according to the present invention the method is characterized in that the origin value comprises a specific routing information for routing the communication request from the access entity and/or the core network entity in a specific manner. The routing information can also be called a routing context. Typically, during the setup process of a communication connection, a routing information is used to route the communication request in a specific manner. For example, the access entity uses that routing information to contact to a respective server or IP address of the core network entity. Moreover, also the core network entity uses routing information to route that communication request within the core network entity and/or within the core network. The specific routing information according to this aspect of the invention can now be used to differentiate between different origin values by different routing information. In another way, the communication request can use different paths of transfer of its data to make sure that by the different paths of data the specific routing information can give some information about the origin value. It could be understood that, for example, the core network entity within the core network comprises two or more connecting points or doors, which can be used by the communication request to enter the core network entity. Based on the data door on which the communication request arrives, the access entity can be correlated within the origin list and a specific service level. The routing or the use of the specific routing information can thereby be carried out within the access entity as welt as in the core network entity. This is a very easy and cost-efficient way to make use of an origin value.

It is further an advantage that according to the present invention the method is characterized in that the origin value comprises at least one access entity identification being specific for the access entity. The access entity identification can, for example, comprise additional information in form of digital digits to give some further information to identify the origin of the access entity. For example, a specific private extension can be used as the information additionally put in in the communication request. To provide an access entity identification an even higher safety is ensured, compared to the specific routing information according to the upper description. Of course, also different types of origin values can be combined according to the present invention to result in a more specific correlation possibility between the origin values and the origin list.

It is also of advantage that according to the present invention, the method is characterized in that the core network entity is configured as a packet gateway (PGW) of the core network. This is a very easy and cost-efficient way to carry out an inventive method. In particular, such packet gateways also exist within a core network of a telecommunication system. Therefore, the method can be applied directly in already existing mobile telecommunication systems.

A further advantage could be achieved when an inventive method is characterized in that the origin list comprises further information about services being allowed for the access entity. As already discussed in detail, the origin list can, for example, comprise information about specific services to be allowed or specific service levels to be allowed for the respective access entity. Such information can, for example, be formed on a contract basis between a third party providing the third party access entity and the owner of that mobile telecommunication system. The origin list therefore comprises information about who can do what correlated to the communication request and the communication connection to be set up.

A further advantage could be achieved by an inventive method which is characterized in that the step of sending the communication request is initiated by a mobile entity which is connected to the access entity. Therefore, the access entity does not need to be in signaling contact with the entity of the core network all the time. The initiation of the mobile entity and its connection request with the access entity can be used to create the starting point of the inventive method. For example, the access entity can be formed by a wireless LAN network within a hotel. As soon as a mobile entity is connected to the access entity in that example, it is triggering the communication request to be sent by the access entity to the core network and to start the inventive method.

It is also possible that the inventive method it is characterized that the access entity comprises at least one authentication module to authenticate the user of the connected mobile entity. In a typical manner, the authentication of users in mobile entities is carried out in the core network or the core network entity. In this case, an alternative and/or an additional authentication can be also carried out within the access entity. Therefore, for example, different correlations between the identification of the user and the access entity can be used to configure the bandwidth or the general allowance of the connection request of the mobile entity within the access entity

A further aspect of the present invention is a computer program product being stored on a computer readable medium for setting up a communication connection between an access entity offering access to a core network to mobile entities and a core network entity of the core network of a mobile telecommunication system, comprising the following:
- a first computer readable program, comprising instructions which, when executed on a computer, cause the computer to perform the role of access entity according to the invention, and; and
- a second computer readable program, comprising instructions which, when executed on a computer, cause the computer to perform the role of a network entity of a core network according to the invention.

An inventive computer program product can be used to carry out an inventive method.

By using the inventive method, the computer program product comes up with the same advantages which have been discussed in detail with respect to the inventive method.

The present invention is discussed in more detail with respect to the accompanying drawings which show schematically:
- FIG. 1: one first possibility of a signaling connection between an access entity and a core network entity;
- FIG. 2: the situation of FIG. 1 during the sending process of the communication request;
- FIG. 3: the situation of the FIGS. 1 and 2 while changing a routing information and
- FIG. 4: different possibilities for a detailed information within the origin value.

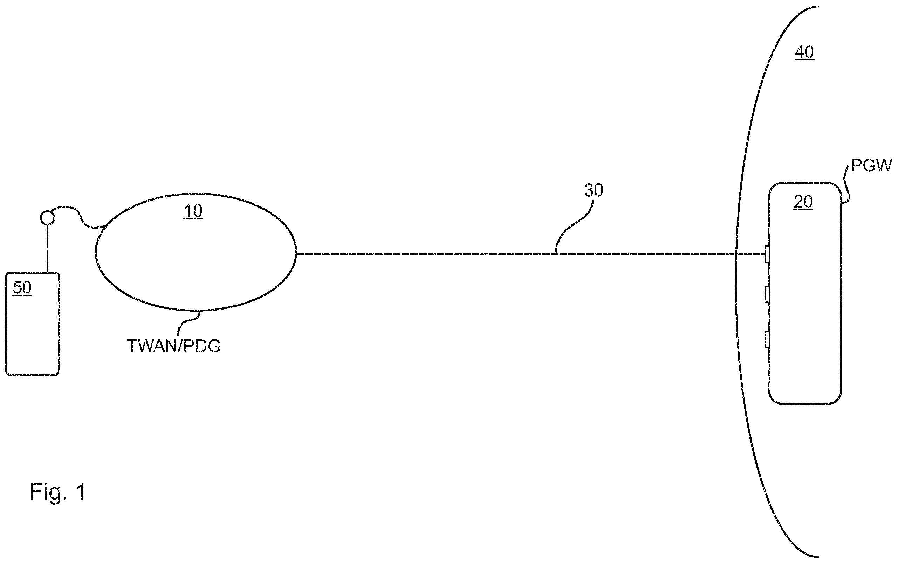

FIG. 1 shows a typical situation for the inventive method. A mobile entity 50 is connected, for example, via a Wi-Fi connection to the access entity 10. The access entity 10 in this case can, for example, be technically carried out as an PDG or a TWAN. The signaling communication is set up as a communication connection 30 between the access entity 10 and the core network entity 20 of the core network 40. In this example, the core network entity 20 can, for example, be carried out as a packet gateway PGW.

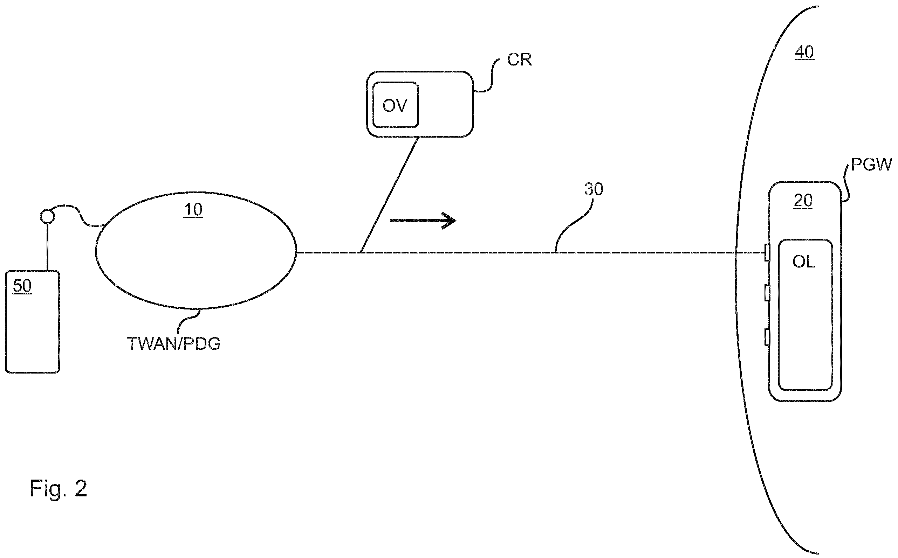

To establish now a communication over the communication connection and to set up that communication connection 30, a communication request CR is sent from the access entity 10 to the core network entity 20. That communication request CR which can be seen in FIG. 2, comprises an origin value OV. That origin value OV is compared to an origin list OL which is located in this example within the core network entity 20. Based on that origin value OV and the results of the comparison step with the origin list OL the information of the origin of the access entity 10 is now existing also in the core network entity 20.

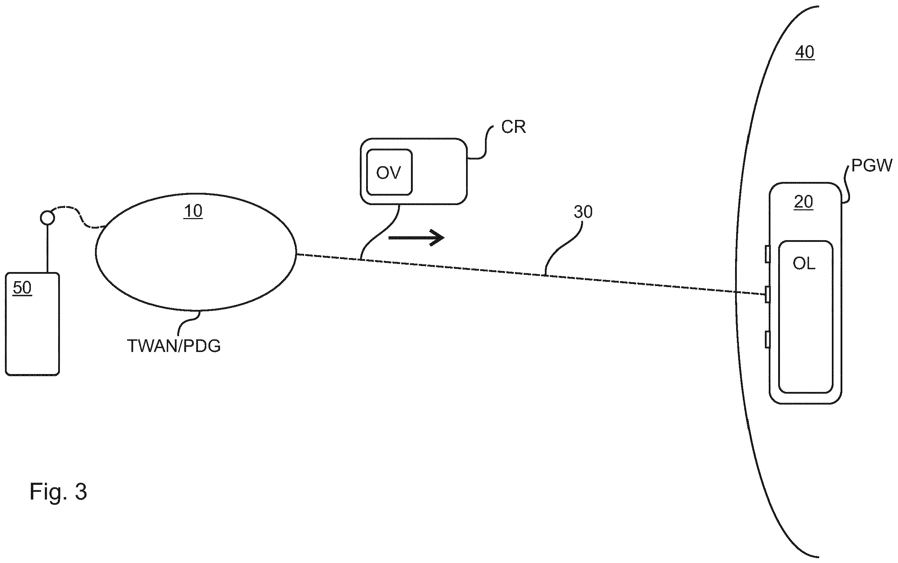

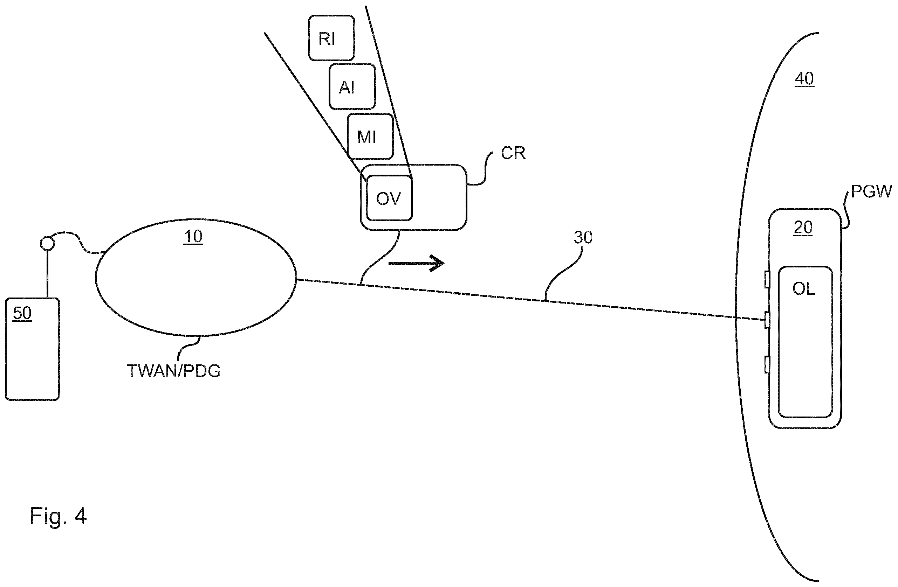

For example, in FIG. 3 the origin value OV comprises a specific routing information RI which can also be seen in FIG. 4. In that case, the communication connection 30 is set up to a different connection point, namely the middle one in FIG. 3 and now being specific for the origin and the correlation between the origin value OV and the origin list OL. In FIG. 4 beside the specific routing information RI also access entity identification Al for the access entity 10 as well as a mobile entity identification MI being specific for the mobile entity 50 can be seen.

Of course, aforesaid description of the accompanying drawings is only by the way of detail and example. Specific features of each aspect of the present invention and the figures can be combined with each other if of technical sense.

### REFERENCE SIGNS

- 10: access entity
- 20: core network entity
- 30: communication connection
- 40: core network
- 50: mobile entity

- CR: communication request
- OV: origin value
- OL: origin list
- RI: specific routing information
- AI: access entity identification
- MI: mobile entity identification

- PGW: packet gateway
- TWAN: trusted wireless access network
- PDG: enhanced packet data gateway

## Claims

1. Method to set up a communication connection (30) between an access entity (10) and a core network entity (20) of a core network (40) of a mobile telecommunication system, said access entity (10) being configured as a trusted wireless access network (TWAN) and/or an enhanced packet data gateway (ePDG), offering access to the core network (40) to mobile entities (50) connected to the access entity (10), said method comprising the following steps:
- Sending a communication request (CR), comprising at least one origin value (OV) specific for the origin of the access entity (10), from the access entity (10) to the core entity (20),
- Receiving the communication request (CR) at the core entity (20),
- Comparing the origin value (OV) of the communication request (CR) with an origin list (OL), wherein the origin list (OL) comprises separate service levels, which are correlated to origin values (OV) of access entities (10), and
- Setting up the communication connection (30) adapted to the service level correlated to the at least one origin value specific for the origin of the access entity (10), based on the result of the comparison,
wherein the origin value (OV) comprises at least one mobile entity identification (MI) being specific for a mobile entity (50) connected to the access entity (10) and/or specific for the user of said mobile entity (50), and
wherein the origin value (OV) is specific for a location of the access entity (10) and/or comprises information that the access entity (10) is hosted by a third party, said third party being correlated with the owner of the mobile telecommunication system with a service contract defining the service level correlated to the origin value (OV) specific for the origin of the access entity (10).

2. Method according to claim 1, **wherein** the step of setting up the communication connection (30) is selected out of at least one of the following options:
- Setting up the requested communication connection (30)
- Setting up a communication connection (30) which is different from the requested communication connection (30)
- Blocking the set up a communication connection (30)

3. Method according to any of the preceding claims, **wherein** the step of comparison of the origin value (OV) is carried out within the core network (40), in particular within the core network entity (20).

4. Method according to any of the preceding claims, **wherein** the origin value (OV) comprises a specific routing information (RI) for routing the communication request (CR) from the access entity (10) to the core network entity (20) in a specific manner.

5. Method according to any of the preceding claims, **wherein** the origin value (OV) further comprises at least one access entity identification (Al) being specific for the access entity (10).

6. Method according to any of the preceding claims, **wherein** the core network entity (20) is configured as a packet gateway (PGW) of the core network (40).

7. Method according to any of the preceding claims, **wherein** the origin list (OL) comprises further information about services being allowed for the access entity (10).

8. Method according any of the preceding claims, **wherein** the access entity (10) comprises at least one authentication module (12) configured to authenticate the user of the connected mobile entity (50).

9. Computer program product being stored on a computer readable medium, comprising:
- a first computer program, comprising instructions which, when executed on a computer, cause the computer to perform the role of access entity (10) according to any of the claims 1 - 8, and
- a second computer program, comprising instructions which, when executed on a computer, cause the computer to perform the role of a core network entity (20) of a core network (40) according to any of the claims 1 - 8.

## Patentansprüche

1. Verfahren zum Aufbau einer Kommunikationsverbindung (30) zwischen einer Zugangseinheit (10) und einer Kernnetzwerkeinheit (20) eines Kernnetzes (40) eines mobilen Telekommunikationssystems, wobei die Zugangseinheit (10) als ein vertrauenswürdiges drahtloses Zugangsnetz (TWAN) und/oder ein erweitertes Paketdaten-Gateway (ePDG) konfiguriert ist, das mobilen Einheiten (50), die mit der Zugangseinheit (10) verbunden sind, Zugang zum Kernnetz (40) ermöglicht, wobei das Verfahren die folgenden Schritte umfasst:
- Senden einer Kommunikationsanfrage (CR), die mindestens einen für den Ursprung der Zugangseinheit (10) spezifischen Ursprungswert (OV) umfasst, von der Zugangseinheit (10) an die Kernnetzwerkeinheit (20),
- Empfang der Kommunikationsanfrage (CR) in der Kernnetzwerkeinheit (20),
- Vergleichen des Ursprungswerts (OV) der Kommunikationsanfrage (CR) mit einer Ursprungsliste (OL), wobei die Ursprungsliste (OL) separate Service-Ebenen umfasst, die mit Ursprungswerten (OV) von Zugangseinheiten (10) korreliert sind, und
- Aufbau der Kommunikationsverbindung (30), die im Wesentlichen an die Service-Ebene angepasst ist, die mit dem mindestens einen Ursprungswert korreliert, der für den Ursprung der Zugangseinheit (10) spezifisch ist, basierend auf dem Ergebnis des Vergleichs,
wobei der Ursprungswert (OV) mindestens eine Identifizierung einer mobilen Einheit (MI) umfasst, die spezifisch für eine mit der Zugangseinheit (10) verbundene mobile Einheit (50) und/oder spezifisch für den Benutzer der mobilen Einheit (50) ist, und wobei der Ursprungswert (OV) spezifisch für einen Standort der Zugangseinheit (10) ist und/oder Informationen darüber umfasst, ob die Zugangseinheit (10) von einer dritten Partei gehostet wird, wobei die dritte Partei mit dem Eigentümer des mobilen Telekommunikationssystems mit einem Dienstvertrag korreliert ist, der die mit dem Ursprungswert (OV) korrelierte Service-Ebene definiert, die für den Ursprungswert der Zugangseinheit (10) spezifisch ist.

2. Verfahren nach Anspruch 1, **wobei** der Schritt des Aufbaus der Kommunikationsverbindung (30) aus mindestens einer der folgenden Optionen ausgewählt wird:
- Aufbau der gewünschten Kommunikationsverbindung (30)
- Aufbau einer Kommunikationsverbindung (30), die sich von der gewünschten Kommunikationsverbindung (30) im Wesentlichen unterscheidet
- Blockieren des Aufbaus einer Kommunikationsverbindung (30)

3. Verfahren gemäß einem der vorhergehenden Ansprüche, **wobei** der Schritt des Vergleichs des Ursprungswerts (OV) innerhalb des Kernnetzes (40), insbesondere innerhalb der Kernnetzwerkeinheit (20), durchgeführt wird.

4. Verfahren gemäß einem der vorhergehenden Ansprüche, **wobei** der Ursprungswert (OV) eine spezifische Leitweginformation (RI) zur Leitweglenkung der Kommunikationsanfrage (CR) von der Zugangseinheit (10) zur Kernnetzwerkeinheit (20) auf eine bestimmte Weise umfasst.

5. Verfahren gemäß einem der vorhergehenden Ansprüche, **wobei** der Ursprungswert (OV) ferner mindestens eine für die Zugangseinheit (10) spezifische Zugangseinheitskennung (AI) umfasst.

6. Verfahren gemäß einem der vorhergehenden Ansprüche, **wobei** die Kernnetzwerkeinheit (20) als Paket-Gateway (PGW) des Kernnetzes (40) konfiguriert wird.

7. Verfahren gemäß einem der vorhergehenden Ansprüche, **wobei** die Ursprungsliste (OL) weitere Informationen über die für die Zugangseinheit erlaubten Services umfasst (10).

8. Verfahren gemäß einem der vorhergehenden Ansprüche, **wobei** die Zugangseinheit (10) mindestens ein Authentifizierungsmodul (12) umfasst, das so konfiguriert ist, dass es den Benutzer der verbundenen mobilen Einheit (50) authentifiziert.

9. Computerprogrammprodukt, das auf einem computerlesbaren Medium gespeichert ist, umfassend:
- ein erstes Computerprogramm, das Befehle enthält, die, wenn sie auf einem Computer ausgeführt werden, den Computer veranlassen, die Rolle einer Zugangseinheit (10) gemäß einem der Ansprüche 1 bis 8 zu übernehmen, und
- ein zweites Computerprogramm, das Befehle enthält, die, wenn sie auf einem Computer ausgeführt werden, den Computer veranlassen, die Rolle einer Kernnetzwerkeinheit (20) eines Kernnetzes (40) gemäß einem der Ansprüche 1 bis 8 zu übernehmen.

## Revendications

1. Procédé pour établir une connexion de communication (30) entre une entité d'accès (10) et une entité de réseau central (20) d'un réseau central (40) d'un système de télécommunication mobile, ladite entité d'accès (10) étant configurée comme un réseau d'accès sans fil de confiance (TWAN) et/ou une passerelle de données par paquets améliorée (ePDG), offrant un accès au réseau central (40) à des entités mobiles (50) connectées à l'entité d'accès (10), ledit procédé comprenant les étapes suivantes :
- Envoi d'une demande de communication (CR), comprenant au moins une valeur d'origine (OV) spécifique à l'origine de l'entité d'accès (10), de l'entité d'accès (10) à l'entité de réseau centrale (20),
- Réception de la demande de communication (CR) à l'entité de réseau centrale (20),
- Comparer la valeur d'origine (OV) de la demande de communication (CR) avec une liste d'origine (OL), dans laquelle la liste d'origine (OL) comprend des niveaux de service distincts, qui sont corrélés aux valeurs d'origine (OV) des entités d'accès (10), et
- Établissement de la connexion de communication (30) adaptée au niveau de service corrélé à au moins une valeur d'origine spécifique à l'origine de l'entité d'accès (10), sur la base du résultat de la comparaison,
dans lequel la valeur d'origine (OV) comprend au moins une identification d'entité mobile (MI) spécifique à une entité mobile (50) connectée à l'entité d'accès (10) et/ou spécifique à l'utilisateur de ladite entité mobile (50), et
dans lequel la valeur d'origine (OV) est spécifique à un emplacement de l'entité d'accès (10) et/ou comprend des informations selon lesquelles l'entité d'accès (10) est hébergée par un tiers, ledit tiers étant corrélé avec l'utilisateur du système de télécommunication mobile par un contrat de service, définissant le niveau de service corrélé à la valeur d'origine (OV) spécifique à l'origine de l'entité d'accès (10).

2. Procédé selon la revendication 1, **dans lequel** l'étape d'établissement de la connexion de communication (30) est sélectionnée parmi au moins une des options suivantes :
- Établissement de la connexion de communication demandée (30)
- Établissement d'une connexion de communication (30) différente de la connexion de communication demandée (30)
- Blocage de l'établissement d'une connexion de communication (30)

3. Procédé selon l'une des revendications précédentes, **dans lequel** l'étape de comparaison de la valeur d'origine (OV) est effectuée au sein du réseau central (40), en particulier au sein de l'entité du réseau central (20).

4. Procédé selon l'une des revendications précédentes, **dans lequel** la valeur d'origine (OV) comprend une information de routage spécifique (RI) pour acheminer la demande de communication (CR) de l'entité d'accès (10) à l'entité de réseau central (20) d'une manière spécifique.

5. Procédé selon l'une des revendications précédentes, **dans lequel** la valeur d'origine (OV) comprend en outre au moins une identification d'entité d'accès (Al) spécifique à l'entité d'accès (10).

6. Procédé selon l'une des revendications précédentes, **dans lequel** l'entité de réseau central (20) est configurée comme une passerelle de paquets (PGW) du réseau central (40).

7. Procédé selon l'une des revendications précédentes, **dans lequel** la liste d'origine (OL) comprend des informations supplémentaires sur les services autorisés pour l'entité d'accès (10).

8. Procédé selon l'une des revendications précédentes, **dans lequel** l'entité d'accès (10) comprend au moins un module d'authentification (12) configuré pour authentifier l'utilisateur de l'entité mobile connectée (50).

9. Produit de programme informatique stocké sur un support lisible par ordinateur, comprenant :
- un premier programme informatique, comprenant des instructions qui, lorsqu'elles sont exécutées sur un ordinateur, font que l'ordinateur joue le rôle d'entité d'accès (10) selon l'une des revendications 1 à 8, et
- un second programme informatique, comprenant des instructions qui, lorsqu'elles sont exécutées sur un ordinateur, font que l'ordinateur joue le rôle d'une entité de réseau central (20) d'un réseau central (40) selon l'une des revendications 1 à 8.
